# EUROPÄISCHE PATENTSCHRIFT

(11) **EP 0 355 484 B1**
(45) Veröffentlichungstag und Bekanntmachung des Hinweises auf die Patenterteilung: **18.10.1995**
(21) Anmeldenummer: 89114121.0
(22) Anmeldetag: 31.07.1989
(51) Int. Cl.: H04M 3/50, H04M 9/08, H04M 9/00

(54) **Verfahren zur Durchführung einer Steuerprozedur im Zusammenhang mit der Möglichkeit des Direktansprechens eines Teilnehmers in einem rechnergesteuerten Kommunikationssystem, insbesondere einem Key-System**
Method for realizing a control procedure in combination with the possibility of directly addressing a subscriber in a calculator-controlled communication system, especially a key system
Méthode pour réaliser une procédure de commande en combinaison avec la possibilité d'adressage direct d'un abonné dans un système de communication commandé par calculateur, en particulier un système à touches

(30) Priorität: 18.08.1988 DE 3828113
(43) Veröffentlichungstag der Anmeldung: 28.02.1990
(73) Patentinhaber: SIEMENS AKTIENGESELLSCHAFT, 80333 München (DE)
(72) Erfinder: Böttger, Detlev, D-5840 Schwerte 4 (DE); Roth, Roland, D-9650 Gelsenkirchen (DE)

(56) Entgegenhaltungen:
- US-A- 3 904 834
- US-A- 4 001 517
- TELECOM REPORT, Band 9, Nr. 2, März/April 1986, Seiten 152-155, Berlin, DE; H. BRAKEBUSCH: "Cheftelefon Siemens topset 204 schafft neue Dimension im Sekretariat"
- NACHRICHTEN TELEFONBAU UND NORMALZEIT, Nr. 86, 1984, Seiten 29-38, Dreieich, DE; E. FRERICHS et al.: "Die TN-Chefanlagen TC 40"

## Beschreibung

Die Erfindung betrifft ein Verfahren zur Durchführung einer Steuerprozedur im Zusammenhang mit dem direkten Ansprechen eines Teilnehmers, dem ein erstes Endgerät (Chefstation) zugeordnet ist, das mit einem zweiten Endgerät (Sekretärstation) in einer besonderen vermittlungstechnischen Konstellation (Chef-Sekretär) steht, in einem rechnergesteuerten Kommunikationssystem, insbesondere einem Key-Kommunikationssystem, wobei über das zweite Endgerät zur Realisierung dieses direkten Ansprechens das Mikrophon und der Lautsprecher einer zusätzlichen, dem ersten Endgerät zugehörigen Lauthör-Freisprecheinrichtung aktivierbar sind, wobei für den Anschluß eines Endgerätes an das Kommunikationssystem eine der Übertragung von Nutzinformationen dienende Nutzverbindung und zusätzlich eine für den digitalen Datenaustausch zwischen dem Endgerät und der Rechnersteuerung dienende Steuerverbindung vorgesehen ist und wobei der Rechnersteuerung Speicher zur Aufnahme von vermittlungsprozedur- und leistungsmerkmalprozedurrelevanten Steuerdaten zugeordnet sind.

Neuzeitliche Kommunikationssysteme sind nicht nur zur eigentlichen Vermittlungssteuerung, sondern auch zu einer Steuerung bzw. Realisierung zusätzlicher, über den Vermittlungsvorgang hinausgehender Steuervorgänge befähigt. Weiterhin sind sie durch ihre Flexibilität hinsichtlich Anlagenkonfigurationsänderungen und Änderungen benutzerindividueller Daten gekennzeichnet. Durch die zusätzlichen Steuervorgänge lassen sich unter anderem Leitungsmerkmale realisieren, wobei eine große Anzahl unterschiedlichster Leistungsmerkmale bekannt ist. Derartige Leitungsmerkmale können entweder bei Belegen der Vermittlungseinrichtung oder aber während einer bereits bestehenden Gesprächsverbindung eingeleitet werden. Dies kann beispielsweise durch die Wahl bestimmter Ziffern bzw. Ziffernkombinationen und/oder durch die Betätigung sogenannter Funktionstasten erfolgen. Zu solchen Leistungsmerkmalen zählen beispielsweise akustische Hinweise für wartende Teilnehmer, die Verhinderung unerwünschter Verbindungen, die selbsttätige Rufweiterleitung, das Anklopfen und das unmittelbare Ansprechen eines angewählten Teilnehmers. Im Zusammenhang mit der Realisierung dieses letztgenannten Leistungsmerkmals hat dann ein Teilnehmer die Möglichkeit, den am Endgerät des gewünschten Teilnehmers zum Zwecke des Freisprechens neben dem Handapparat vorhandenen Lautsprecher und das Mikrophon wirksam zu schalten. Über den eingeschalteten Lautsprecher kann dann der betreffende Teilnehmer direkt angesprochen werden und er kann freisprechend antworten. Bei der Aktivierung der Lauthör-Freisprecheinrichtung wird ein akustisches und/oder optisches Aufmerksamkeitssignal erzeugt.

Im Zusammenhang mit dem Vermittlungsplatz eines Kommunikationssystems ist es durch die US-PS 4,001,517 bekannt, daß in den Fällen, in denen für einen bestimmten internen Teilnehmer eine externe Gesprächsverbindung ansteht, bei der Betätigung einer dem gewünschten Teilnehmer zugeordneten Taste durch die Bedienperson des Vermittlungsplatzes mehrere Funktionen eingeleitet werden. Bei dieser Tastenbetätigung wird die anstehende externe Verbindung ins Halten gelegt, es wird durch ein Gleichstrom-Steuersignal die Freisprecheinrichtung am Endgerät des betreffenden Teilnehmers aktiviert und es wird die Gesprächsverbindung zwischen der Bedienperson des Vermittlungsplatzes und dem betreffenden Teilnehmer aufgebaut. Dies hat den Zweck, die Bedienperson bei der Herstellung von angeforderten Verbindungen zu entlasten. Es werden dadurch die bei der Weitergabe einer anstehenden Gesprächsverbindung auszuführenden Tätigkeiten reduziert.

Eine Möglichkeit des direkten Ansprechens ist in Nebenstellenanlagen auch für Endgeräte vorgesehen, für die eine besondere vermittlungstechnische Konstellation von vornherein dauerhaft festgelegt ist. Dies ist beispielsweise bei einer Endgerätepaarung (Chefstation-Sekretärstation) der Fall. Es besteht das Bestreben, insbesondere für Teilnehmer mit einer solchen Cheffunktion, die Benutzung des Endgerätes zu erleichtern.

Es ist die Aufgabe der Erfindung, in diesem Sinne die Funktionsmöglichkeiten zu erweitern.

Dies wird für ein Verfahren der eingangs genannten Art dadurch erreicht, daß bei einer für das zweite Endgerät bestehenden Gesprächsverbindung durch den betreffenden Teilnehmer der zentralen Rechnersteuerung eine Signalisierungsinformation über die Steuerverbindung übermittelbar ist, aufgrund der sowohl die Leitung, auf der diese Gesprächsverbindung besteht, in einen Haltezustand mit ausschließlicher erneuter Zugriffsmoglichkeit für das erste und für das zweite Endgerät gebracht wird, als auch gleichzeitig ein Befehl zur Aktivierung der Lauthör-Freisprecheinrichtung an diesem ersten Endgerät bewirkt und eine Rückfrage-Gesprächsverbindung zwischen den beiden Endgeräten hergestellt wird und daß mit Auslösen dieser Rückfrage-Gesprächsverbindung unter Beibehaltung der Lauthör-Freisprechbetriebsart für das erste Endgerät automatisch die Verbindungsherstellung zwischen diesem Endgerät und der sich im Haltezustand befindlichen Leitung erfolgt, so daß - bezogen auf das erste Endgerät - der betreffende Teilnehmer ohne jegliche Handhabung an seinem Endgerät die ursprüngliche Gesprächsverbindung übernehmen kann.

Es kann also eine vom zweiten Endgerät als Sekretärstation erhaltene oder aufgebaute Gesprächsverbindung im Lauthör-Freisprechzustand dem ersten Endgerät vermittelt werden, ohne daß der Teilnehmer, dem diese Chefstation zugeordnet ist, irgendeine Handhabung an diesem Endgerät vorzunehmen hat. Wesentlich ist dabei, daß hierzu keine spezifischen Steuerprozeduren für dieses Leistungsmerkmal in das System implementiert werden müssen, sondern daß man dabei durch eine entsprechende Verkettung auf andere bereits vorhandene Prozeduren, wie z. B. Übergeben vor bzw. nach Melden, zurückgreifen kann. Vor der Herstellung der Rückfrageverbindung wird die bestehende Gesprächsverbindung in eine Warteposition gebracht, in der von keinem anderen Endgerät aus, außer dem ersten bzw. zweiten Endgerät, auf diese gehaltene Leitung zugegriffen werden kann.

Diese genannten erfindungsgemäßen Funktionen sind gemäß einer Weiterbildung der Erfindung ausschließlich durch die Betätigung einer entsprechenden Funktionstaste einleitbar. Dieser Taste sind also das Leistungsmerkmal als solches, das Verbindungsziel und die Überführung in den Haltezustand unterlegt und diese jeweiligen Teilfunktionen werden aufgrund der bei der Betätigung übermittelten Signalisierungsinformation in ihrer Gesamtheit veranlaßt.

Gemäß einer Weiterbildung der Erfindung ist aus der Rückfrageverbindung zwischen dem zweiten und dem ersten Endgerät heraus unter Deaktivierung der dem ersten Endgerät zugeordneten Lauthör-Freisprecheinrichtung durch die Betätigung einer der betreffenden Leitung am zweiten Endgerät zugeordneten Taste die ursprüngliche Gesprächsverbindung mit dem gehaltenen Teilnehmer durch den Teilnehmer des zweiten Endgerätes wieder aufnehmbar ist. Ist also der Teilnehmer, dem das erste Endgerät zugeordnet ist, nicht zu einer Übernahme der gehaltenen Verbindung bereit, so wird bei der Zuschaltung dieser Verbindung an das zweite Endgerät automatisch die Lauthör-Freisprecheinrichtung unwirksam geschaltet, ohne daß der betreffende Teilnehmer in irgendeiner Form tätig werden muß. Die genannten erfindungsgemäßen Möglichkeiten führen aufgrund der enormen Vereinfachung zu einer erhöhten Akzeptanz dieses angebotenen Leistungsmerkmals.

Das erfindungsgemäße Verfahren wird nachstehend anhand einer Figur erläutert.

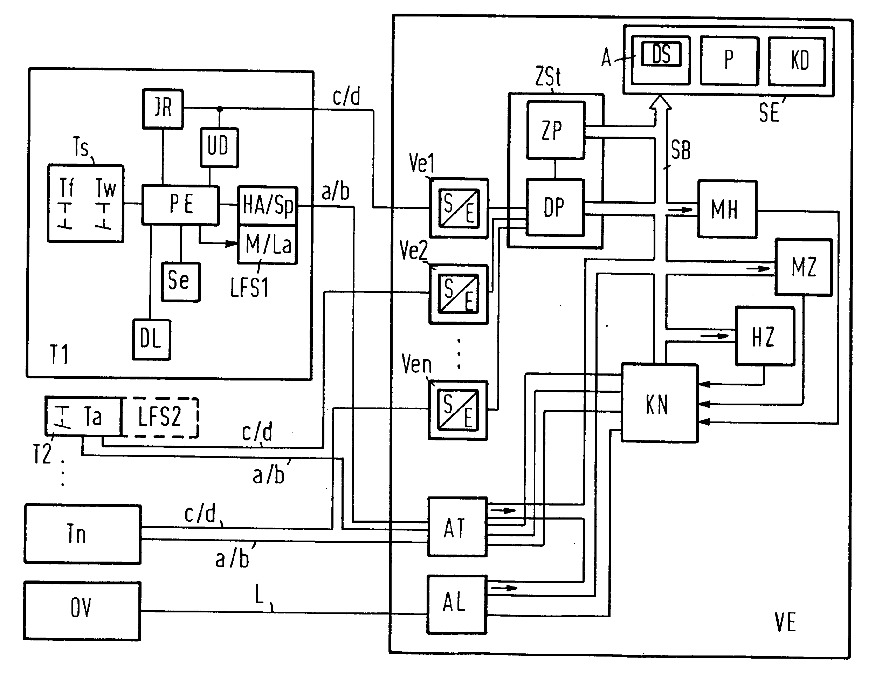

Die Figur zeigt im Blockschaltbild ausgewählte Funktionseinheiten eines Kommunikationssystems in Form einer Fernsprechvermittlungsanlage VE, an die Teilnehmerendeinrichtungen T1...Tn angeschlossen sind. Dieser Anschluß erfolgt im Ausführungsbeispiel bei einer Vermittlungsanlage, der die analoge Sprachübertragung zugrundeliegt, sternförmig über eine jeweils vieradrige Anschlußleitung, die aus einem Sprechadernpaar a/b und einem Signalisierungsadernpaar c/d besteht. Bei einem ausschließlich digitalen System wären die Steuerverbindung und die für die Übertragung der Sprachinformation vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage realisiert werden kann. Zur im wesentlichen prozeduralen Anpassung werden die Teilnehmerendeinrichtungen T1...Tn über eine Anschalteeinheit AT, die die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt die Verbindung über eine Anschalteeinheit AL. Die Steuerungsaufgaben der Anlage VE übernimmt die zentrale Rechnersteuerung ZSt, die über einen Systembus SB mit einer Speichereinheit SE, der Anschalteeinheit AT, der Koppeleinrichtung KN und weiteren Systemkomponenten, wie beispielsweise einer für die Bildung von Mehrfrequenzcodezeichen dienenden Einheit MZ und einer für die Erzeugung der Hörtöne zuständigen Einheit HZ, verbunden ist. Die Aufgaben der zentralen Rechnersteuerung sind im Ausführungsbeispiel auf zwei Prozessoren verteilt. Der Prozessor ZP dient beispielsweise der vermittlungs- und betriebstechnischen Steuerung. Durch den Prozessor DP erfolgt unter Einschaltung einer ein Sendeteil S und ein Empfangsteil E enthaltenden Verarbeitungseinheit Ve die Signalisierungsbearbeitung. Solche Verarbeitungseinheiten Ve1...Ven sind jeweils einem Signalisierungsadernpaar c/d zugeordnet.

Die Prozessoren ZP und DP haben über den Systembus SB Zugriff zu den in der Speichereinrichtung SE abgelegten Daten. Die Speichereinrichtung SE besteht aus einem Arbeitsspeicher A, einem Programmspeicher P und einem Kundendatenspeicher KD. Der Arbeitsspeicher A dient unter anderem der Aufnahme von Anlagenkonfigurationsdaten. Im Programmspeicher P sind das Anlagenbetriebsprogramm und die zu ihm gehörenden betriebstechnischen Daten abgespeichert. In dem Speicherteil KD sind die Kundendaten, wie z. B. die den einzelnen Teilnehmerendeinrichtungen T1...Tn zugeteilten Berechtigungen abgelegt. Das Konfigurieren dieser Daten kann z. B. über die Eingabetastatur einer als Betriebsterminal festlegbaren Endeinrichtung T1...Tn oder über ein gegebenenfalls vorgesehenes eigenständiges Betriebsterminal erfolgen.

Als Teileinheit des Arbeitsspeichers A können in einem gesonderten Speicherteil diejenigen Informationen abgelegt sein, die als vermittlungstechnische Informationen auf einem an der Endeinrichtung angeordneten Display DL dargestellt werden sollen. Die jeweils aktuellen Signalisierungsinformationen werden abhängig von dem vermittlungstechnischen Zustand durch die zentrale Rechnersteuerung ZSt festgelegt und aus dem Speicher DS der jeweiligen Endeinrichtung T1...Tn übermittelt. Stellt die Vermittlungsanlage VE ein Key-Kommunikationssystem dar, so kann die der jeweiligen Endeinrichtung übermittelte Information beispielsweise eine Aussage über den Belegungszustand einer Leitung L und/oder der übrigen Endeinrichtungen beinhalten. Auf diesem Display DL sind auch die im Zusammenhang mit dem Aufbau und dem Umkoppeln einer Verbindung für den Teilnehmer bestimmten Hinweise darzustellen. So können beispielsweise die für eine optische Bedienerführung vorgesehenen kurzen Informationstexte auf diesem Display DL angezeigt werden.

Für die Teilnehmerendeinrichtung T1 sind in der Figur einzelne Funktionskomponenten dargestellt. Über das jeweilige a/b-Adernpaar werden Sprachinformationen übertragen. Mit diesen Sprechadern ist die Sprechschaltung Sp verbunden. Sie dient im Zusammenhang mit dem Handapparat HA der Verarbeitung der übertragenen Sprachinformationen und bildet den Leitungsabschluß.

Mit der Einheit Ts ist schematisch eine Tastatur dargestellt, die mit einer in jeder Endeinrichtung T1...Tn zur Steuerung ihrer Funktionen vorhandenen und z. B. durch einen Prozessor realisierten Steuereinheit PE gekoppelt ist. Die Taste Tw symbolisiert eine übliche Wähltastatur. Die Taste Tf steht für eine Reihe von weiteren Tasten, insbesondere sogenannten Funktionstasten, durch deren Betätigung jeweils bestimmte Funktionsabläufe aktiviert werden können. Hierzu gehören mittels des Anlagenbetriebsprogrammes realisierbare Leistungsmerkmale, wie z. B. das Leistungsmerkmal "direktes Ansprechen". Den Funktionstasten Tf können bestimmte Funktionen fest zugeordnet sein oder alternativ hierzu frei zugeordnet werden.

Mit der Steuereinheit PE sind ferner die Einheiten IR, UD, Se und DL verbunden. Die Einheit IR erkennt die Betätigung einzelner Tasten Tw, Tf, bildet entsprechende Signalisierungsinformationen und gibt diese über die Signalisierungsadern c/d an die Vermittlungsanlage VE oder unmittelbar an das der Teilnehmerendeinrichtung zugeordnete Display DL ab. Beispielsweise werden durch Wähltasten Tw erzeugte Anreize als Ziffern auf dem Display DL dargestellt. Die Einheit UD registriert Informationen, die einer Teilnehmerendeinrichtung über die jeweiligen c/d-Signalisierungsadern von der Vermittlungsanlage VE zur weiteren Verarbeitung zugeführt werden. Die Einheit Se ist als Speicher ausgebildet und dient beispielsweise der Aufnahme eines Betriebsprogrammes für die Steuereinheit PE und für zwischenzuspeichernde Daten.

Für die Realisierung von leistungsmerkmalsspezifischen Steuerprozeduren beinhaltet die zentrale Rechnersteuerung ZSt einzelne Programmsteuerungen, die auf die in den entsprechenden Einheiten der Speichereinrichtung SE enthaltenen Steuerdaten zugreifen. So soll beispielsweise für die Vermittlungsanlage VE die Möglichkeit bestehen, einen Teilnehmer direkt anzusprechen. Das bedeutet, daß nach Anwahl des betreffenden Teilnehmers und weiterer Eingabe einer bestimmten Codeinformation die neben dem Handapparat am jeweiligen Endgerät zusätzlich vorhandene Einheit LFS1 bzw. LFS2 aktivierbar ist. Es besteht also die Möglichkeit, am Endgerät des jeweils gewünschten Gesprächspartners die Einschaltung des in der Einheit LFS1 der Endeinrichtung T1 enthaltenen Mikrophons M und des Lautsprechers La zu veranlassen. Die hierzu abzugebende Information kann beispielsweise durch die manuelle Betätigung einer Servicetaste und nachfolgender Betätigung einer Zifferntaste der Rechnersteuerung über die Signalisierungsadern c/d übermittelt werden. Der in der geschilderten Weise unmittelbar ansprechbare Teilnehmer kann dann ohne Abheben des Handapparates freisprechend antworten.

Es werde nun angenommen, daß die Endgeräte T1 und T2 als Endgerätepaarung in einer besonders festgelegten vermittlungstechnischen Konstellation zueinander stehen. Eine solche besondere Konstellation ist beispielsweise dann gegeben, wenn das Endgerät T1 eine sogenannte Chefstation und das Endgerät T2 die dieser Chefstation zugeordnete Sekretärstation darstellt. Im Zusammenhang mit der Möglichkeit des vorab beschriebenen Direktansprechens wird erfindungsgemäß die Betriebsmöglichkeit für den eine Cheffunktion ausübenden Teilnehmer vereinfacht. Unter der Voraussetzung, daß von der Sekretärstation T2 über die externe Leitung L eine externe Gesprächsverbindung ankommend angenommen oder abgehend selbst aufgebaut wurde, kann eine solche Verbindung der Chefstation T1 ohne Tätigwerden des betreffenden Chefteilnehmers vermittelt werden. Es kann in einfachster Weise vorgesehen sein, daß die hierzu notwendigen Funktionen durch eine von der Rechnersteuerung ZSt bewerteten Signalisierungsinformation veranlaßt werden, wobei diese Signalisierungsinformation durch die Betätigung einer entsprechend programmierten Funktionstaste Ta übermittelt wird. Dieser Taste ist neben dem Leistungsmerkmal "Direktansprechen" weiterhin das betreffende Verbindungsziel "Chefteilnehmer" und die Überführung der externen Leitung L in den Haltezustand unterlegt. Aufgrund der bei der Betätigung der Funktionstaste Ta der Rechnersteuerung ZSt zugeführten Signalisierungsinformation wird an der Endeinrichtung T1 die Lauthör-Freisprecheinrichtung LFS1 aktiviert. Diese Aktivierung wird durch die Abgabe eines Aufmerksamkeitszeichens in Form eines kurzen Aufmerksamkeitstones und/oder einer entsprechenden Anzeige auf dem Display DL signalisiert. Die Einheit LFS1 kann in dem Endgerät T1 unmittelbar integriert sein oder sie kann eine davon räumlich getrennt plazierbare Einheit darstellen.

Neben der Aktivierung des in der Einheit LFS1 enthaltenen Mikrophons M und des zugehörigen Lautsprechers La wird weiterhin automatisch zwischen der Sekretärstation T2 und der Chefstation T1 eine Rückfrageverbindung aufgebaut. Der betreffende Teilnehmer kann also unmittelbar angesprochen werden. Neben den beiden genannten Steuerprozeduren wird aufgrund der Tastenbetätigung Ta zusätzlich noch die Überführung der bestehenden Gesprächsverbindung in den Haltezustand veranlaßt. Die für diese genannten Prozeduren relevanten Steuerdaten sind in den entsprechenden Teilen der Speichereinrichtung SE abgespeichert. Bei der Überführung der externen Leitungsverbindung in den Haltezustand erhält die betreffende externe Leitung L einen entsprechenden Leitungsabschluß. Dies kann durch die Hinzuschaltung eines diesbezüglich ausgelegten Bausteins MH erfolgen. Über diesen Baustein kann auf die im Haltezustand befindliche externe Leitung über die Koppeleinrichtung KN beispielsweise Musik eingespielt werden. In diesem Haltezustand haben ausschließlich die Chefstation T1 oder die Sekretärstation T2 eine Zugriffsmöglichkeit zu dieser Leitung. Wurde aufgrund der automatisch zwischen den Endgeräten T2 und T1 hergestellten Rückfrageverbindung über die aktivierte Lauthör-Freisprecheinrichtung LFS1 abgeklärt, daß der Chefteilnehmer die in den Haltezustand übergeführte externe Leitung übernehmen will, so kann dies beispielsweise durch einfaches Auflegen des Handapparates oder nach Durchführung einer diesem Auflegen entsprechenden Funktion an der Sekretärstation T2 automatisch bewirkt werden. Der durch die zentrale Rechnersteuerung ZSt festgestellte Beendigung der Rückfrageverbindung wird von der diese einzelnen Verbindungsphasen überwachenden Rechnersteuerung als Befehl dafür gewertet, die Verbindungsherstellung der Chefstation T1 mit der im Wartezustand befindlichen Leitung L zu bewirken. Es wird dabei gleichzeitig die bereits vorgenommene Aktivierung der Lauthör-Freisprecheinrichtung LFS1 aufrechterhalten. Mit der wirksamen Anschaltung dieser wartenden externen Leitung L über das Koppelfeld KN an die Chefstation T1 kann also durch den Chefteilnehmer in die Gesprächsverbindung eingetreten werden, ohne daß er irgendeine Handhabung an der Chefstation T1 vornehmen mußte, um die geschilderten Funktionsabläufe zu veranlassen. Die Übergabe der Leitung aus dem Wartezustand kann vermittels einer Steuerprozedur erfolgen, die z. B. für die gleichfalls vorgesehene Funktion "Übergaben nach Melden" bereits in der Vermittlungsanlage VE implementiert ist.

Soll die geschilderte Vermittlung der in den Haltezustand übergeführten externen Leitung L nicht vorgenommen werden, so kann die Sekretärstation T2 beispielsweise durch Betätigung einer der betreffenden externen Leitung zugeordneten Taste die Gesprächsverbindung mit dem gehaltenen Teilnehmer wieder aufnehmen. Gleichzeitig wird die Lauthör-Freisprecheinrichtung LFS1 der Chefstation T1 durch die in einem solchen Fall von der zentralen Rechnersteuerung ZSt veranlaßte Informationsübertragung zu der Chefstation T1 abgeschaltet.

## Patentansprüche

1. Verfahren zur Durchführung einer Steuerprozedur im Zusammenhang mit dem direkten Ansprechen eines Teilnehmers, dem ein erstes Endgerät (T1) zugeordnet ist, das mit einem zweiten Endgerät (T2) in einer besonderen vermittlungstechnischen Konstellation, z.B. Chef-Sekretär, steht, in einem rechnergesteuerten Kommunikationssystem, insbesondere einem Key-Kommunikationssystem (VE), wobei über das zweite Endgerät (T2) zur Realisierung dieses direkten Ansprechens das Mikrophon (M) und der Lautsprecher (La) einer zusätzlichen, dem ersten Endgerät (T1) zugehörigen Lauthör-Freisprecheinrichtung (LFS1) aktivierbar sind, wobei für den Anschluß eines Endgerätes an das Kommunikationssystem (VE) eine der Übertragung von Nutzinformationen dienende Nutzverbindung (a/b) und zusätzlich eine für den digitalen Datenaustausch zwischen dem Endgerät und der Rechnersteuerung (ZSt) dienende Steuerverbindung (c/d) vorgesehen ist und wobei der Rechnersteuerung (ZSt) Speicher (SE) zur Aufnahme von vermittlungsprozedur- und leistungsmerkmalprozedurrelevanten Steuerdaten zugeordnet sind,
wobei bei einer für das zweite Endgerät (T2) bestehenden Gesprächsverbindung durch den betreffenden Teilnehmer der zentralen Rechnersteuerung (ZSt) eine Signalisierungsinformation über die Steuerverbindung (c/d) übermittelt wird, aufgrund der sowohl die Leitung (L), über die diese Gesprächsverbindung abgewickelt wird, in einen Haltezustand mit ausschließlicher erneuter Zugriffsmöglichkeit für das erste und für das zweite Endgerät gebracht wird als auch gleichzeitig ein Befehl zur Aktivierung der Lauthör-Freisprecheinrichtung (LFS1) an diesem ersten Endgerät (T1) bewirkt und eine Rückfrage-Sprechverbindung zwischen den beiden Endgeräten (T1, T2) hergestellt wird und wobei mit Auslösen dieser Rückfrage-Sprechverbindung unter Beibehaltung der Lauthör-Freisprechbetriebsart für das erste Endgerät (T1) automatisch die Verbindungsherstellung zwischen diesem Endgerät (T1) und der sich im Haltezustand befindlichen Leitung (L) erfolgt, so daß - bezogen auf das erste Endgerät (T1) - für den betreffenden Teilnehmer ohne jegliche Handhabung an seinem Endgerät die ursprüngliche Gesprächsverbindung übernehmbar ist.

2. Verfahren nach Anspruch 1,
**dadurch gekennzeichnet**,
daß die Übermittlung der Signalisierungsinformation ausschließlich durch die Betätigung einer entsprechenden Funktionstaste (Ta) erfolgt.

3. Verfahren nach Anspruch 1,
**dadurch gekennzeichnet**,
daß aus der Sprechverbindung zwischen dem zweiten Endgerät (T2) und dem ersten Endgerät (T1) heraus unter Deaktivierung der dem ersten Endgerät (T1) zugeordneten Lauthör-Freisprecheinrichtung (LFS1) durch Betätigung einer der betreffenden Leitung am zweiten Endgerät (T2) zugeordneten Taste die ursprüngliche Gesprächsverbindung mit dem gehaltenen Teilnehmer durch den Teilnehmer des zweiten Endgerätes (T2) wieder aufnehmbar ist.

4. Verfahren nach Anspruch 1,
**dadurch gekennzeichnet**,
daß die im Lauthör-Freisprechzustand des ersten Endgerätes (T1) vom zweiten Endgerät (T2) veranlaßbare Vermittlung auf externe Gesprächsverbindungen beschränkt ist.

## Claims

1. Method of carrying out a control procedure in conjunction with the direct addressing of a subscriber, to whom there is assigned a first terminal (T1), which is in a special switching constellation with a second terminal (T2), for example manager/secretary, in a computer-controlled communication system, in particular a key communication system (VE), in which arrangement the second terminal (T2) can be used for realizing this direct addressing to activate the microphone (M) and the loudspeaker (La) of an additional open-listening/hands-free device (LFS1) associated with the first terminal (T1), in which arrangement there is provided for the connection of one terminal to the communication system (VE) a user connection (a/b), serving for the transmission of user information, and additionally a control connection (c/d), serving for the digital data exchange between the terminal and the computer control (ZSt) and in which arrangement the computer control (ZSt) is assigned memories (SE) for receiving control data relevant to switching procedures and user-facility procedures, in which method, in the case of a call connection existing for the second terminal (T2), an item of signalling information is transmitted via the control connection (c/d) by the relevant subscriber to the central computer control (ZSt), on the basis of which information both the line (L) by which this call connection is handled is brought into a holding state, with exclusive renewed access capability for the first and for the second terminal, and simultaneously a command for the activation of the open-listening/hands-free device (LFS1) is effected at this first terminal (T1) and a call-back speech connection is established between the two terminals (T1, T2) and in which method, upon clearing down of this call-back speech connection, while retaining the open-listening/hands-free operating mode for the first terminal (T1), the connection is automatically established between this terminal (T1) and the line (L) in the holding state, so that - with respect to the first terminal (T1) - for the relevant subscriber the original call connection can be taken over without any handling of his terminal.

2. Method according to Claim 1, characterized in that the transmission of the signalling information is performed exclusively by the actuation of a corresponding function key (Ta).

3. Method according to Claim 1, characterized in that, by actuating a key assigned to the relevant line on the second terminal (T2), the original call connection with the held subscriber can be retrieved by the subscriber of the second terminal (T2) from the speech connection between the second terminal (T2) and the first terminal (T1), with deactivation of the open-listening/hands-free device (LFS1) assigned to the first terminal (T1).

4. Method according to Claim 1, characterized in that the switching which can be initiated in the open-listening/hands-free state of the first terminal (T1) from the second terminal (T2) is restricted to external call connections.

## Revendications

1. Procédé pour mettre en oeuvre une procédure de commande de l'adressage direct de la parole à un abonné, auquel est associé un premier terminal (T1) se trouvant dans une configuration particulière en technique de commutation, par exemple directeur-secrétaire, avec un second terminal (T2), dans un système de communication commandé par ordinateur, notamment dans un système (VE) de communication à touches, le microprocesseur (M) et le haut-parleur (La) d'un dispositif supplémentaire (LFS1) mains libres à haut-parleur associé au premier terminal (T1) pouvant être activé par l'intermédiaire du deuxième terminal (T2) pour cet adressage direct de la parole, dans lequel une liaison utile (a/b) servant à la transmission d'informations utiles et en plus une liaison (c/d) de commande servant à l'échange de données numériques entre le terminal et la commande (ZSt) d'ordinateur sont prévues pour le raccordement d'un terminal au système (VE) de communication et des mémoires (SE) destinées à l'enregistrement de données de commande relatives à la procédure de commutation et aux procédures de facilité offertes aux abonnés sont associées à la commande (ZSt) d'ordinateur,
dans lequel, dans le cas d'une liaison de conversation établie pour le deuxième terminal (T2), on transmet par l'abonné concerné à la commande (ZSt) centrale d'ordinateur par l'intermédiaire de la liaison (c/d) de commande une information de signalisation, sur la base de laquelle à la fois on met la ligne (L) par laquelle cette liaison de conversation s'effectue, dans un état d'attente avec nouvelles possibilités d'accès données exclusivement au premier et au second terminal, on déclenche en même temps une instruction d'activation du dispositif (LFS1) mains libres à haut-parleur en ce premier terminal (T1) et on établit une liaison de conversation de rappel entre les deux terminaux (T1, T2), et dans lequel l'établissement de la liaison entre ce terminal (T1) et la ligne (L) se trouvant dans l'état d'attente s'effectue automatiquement à la suppression de cette liaison de conversation de rappel en conservant le mode de fonctionnement en mains libres et à haut-parleur pour le premier terminal (T1), de sorte que la liaison de conversation originelle puisse être prise en charge, en rapport avec le premier terminal (T1), pour l'abonné concerné sans aucune manipulation sur son terminal.

2. Procédé suivant la revendication 1, caractérisé en ce que la transmission de l'information de signalisation s'effectue exclusivement en actionnant une touche (Ta) fonctionnelle correspondante.

3. Procédé suivant la revendication 1, caractérisé en ce que la liaison de conversation originelle avec l'abonné en attente peut être reprise par l'abonné du deuxième terminal (T2) à partir de la liaison de conversation entre le deuxième terminal (T2) et le premier terminal (T1) en désactivant le dispositif (LFS1) mains libres à haut-parleur associé au premier terminal (T1) par actionnement d'une touche associée sur le deuxième terminal (T2) à la ligne concernée.

4. Procédé suivant la revendication 1, caractérisé en ce que la commutation, qui peut être déclenchée dans l'état mains libres et à haut parleur du premier terminal (T1) par le deuxième terminal (T2), est limitée à des liaisons de conversations extérieures.
